# EUROPEAN PATENT SPECIFICATION

(11) **EP 4 397 667 B1**
(45) Date of publication and mention of the grant of the patent: **23.07.2025**
(21) Application number: 23182201.6
(22) Date of filing: 28.06.2023
(51) Int. Cl.: C07F 9/11

(54) **IMPROVED SUSTAINABLE PROCESS FOR PREPARATION OF PHOSPHORIC MONOESTERS AND SALTS THEREOF**
VERBESSERTES NACHHALTIGES VERFAHREN ZUR HERSTELLUNG VON PHOSPHORSÄUREMONOESTERN UND SALZEN DAVON
PROCÉDÉ DURABLE AMÉLIORÉ DE PRÉPARATION DE MONOESTERS PHOSPHORIQUES ET DE LEURS SELS

(30) Priority: 06.01.2023 IN 202321001371
(43) Date of publication of application: 10.07.2024
(73) Proprietor: Galaxy Surfactants Ltd., Navi Mumbai 400 703 Maharashtra (IN)
(72) Inventor: Parab, Bharat Bhikaji, 400703 Navi Mumbai (IN); Mhatre, Pritesh Rajaram, 400703 Navi Mumbai (IN); Sahu, Prasad Sunil, 400703 Navi Mumbai (IN); Warde, Umesh Shivling, 400703 Navi Mumbai (IN)
(74) Representative: Nederlandsch Octrooibureau

(56) References cited:
- DE-A1- 3 520 053
- DE-U1- 29 617 590
- US-A1- 2019 321 277

## Description

### Field of the Invention

The present invention relates to a cost effective, green process for the preparation of alkyl phosphate ester and/or a salt thereof. More particularly, the present invention relates to the process of preparation of mono-alkyl phosphate ester and/or a salt thereof by reacting fatty alcohol with polyphosphoric acid (PPA).

### Background of the Invention

Phosphoric ester salts are commonly used as emulsifiers in skin care applications and in cosmetic and pharmaceutical topical formulations. Alkyl phosphates (e.g. cetyl phosphate and its potassium salt) are widely being used as emulsifiers in leave-on formulations, such as creams and lotions. They are characterised by very good detergency and low toxicity. Due to increasing concerns for ecotoxicity, there is a need for good emulsifiers with less unwanted impurities in it, which otherwise could influence the stability of the formulation and its cosmetic application. It is widely accepted that acidic phosphoric esters are generally equimolar mixtures of mono esters and diesters. The physical properties of both the monoester and the diester are fairly different from each other. Alkali metal salts of a long chain mono-alkyl phosphate ester have good foaming properties, good water solubilities, good emulsifying properties, good cleansing properties and low toxicities to the skin, hence they are suitable for use as a high foaming and cleansing agent and are preferred in personal care applications, whereas the diester form has poorer foaming properties and is hardly soluble in water, making it less suitable as a good foaming, emulsifying and cleansing agent.

Literature reveals different methodologies to prepare alkyl phosphate ester with good mono:dicetyl (mono:dialkyl) phosphate ratio and claimed best conversion with control over unwanted impurities.

GB 1475109 describe the synthesis of cetyl phosphate based on reacting fatty alcohol with phosphorous oxychloride. This process is disadvantageous due to unavoidable generation of organochlorides, the fatty alkyl halide. Additionally, the release of hydrogen chloride during the reaction may lead to corrosion of the apparatus and disposal of the hydrochloric acid is difficult. Due to the toxicity of the fatty alkyl halide, the use of a product with such an impurity, is rarely possible in leave-on cosmetic products such as creams and lotions. Hence, there is a need for a significantly improved manufacturing process which does not lead to the formation of organohalide impurities whilst giving a quantitative conversion.

US 5883280 describes an alternative route. The synthesis is based on reacting an alcohol with polyphosphoric acid followed by converting the phosphoric acid generated during the reaction into polyphosphoric acid by reacting it with phosphorous pentoxide. This method involves the hazardous step of handling phosphorous pentoxide which is reported to be a highly reactive and hazardous chemical. This method ends up with high amounts of dialkyl phosphate and phosphoric acid. Additionally, the attempts to convert the remnant phosphoric acid into polyphosphoric acid and the desired product, leads to the generation of more dicetyl phosphate negatively affecting the desired mono:dialkyl phosphate ratio.

The product made by the polyphosphoric acid and phosphorous pentoxide route without employing purification step, renders formulation incompatible due to high salt content.

DE3520053A1 discloses a process for manufacturing monohexadecyl phosphate by reacting hexadecylalcohol with 112.1% polyphosphorous acid in n-hexane, and then the product is hydrolysed. The product of the hydrolysation is extracted and in the final composition (419 g) comprises 95.9 g (0.298 mol) monohexadecyl phosphate, 1.6 g (0.003 mol) dihexadecyl-phosphate, and 1.08 g inorganic phosphoric acid. During this process the product is dissolved in n-hexane and the excess phosphoric acid is removed by extraction which implies the additional use of hexanol.

Recently, Duesterloh et al. came up with the methodology (US20190321277A1) to lower the inorganic phosphate. To lower the inorganic phosphate the reported methodology in US20190321277A1, is to carry out reaction in solvents like cyclohexane followed by washing with water. But due to amphiphilic nature of cetyl phosphate, neither there is ease of separation of two phases nor removal of solvent traces from the product. Also, the quantity of solvent required and its flammability imposes limitation on effective batch size which is not viable on commercial scale. The removal of remnant solvent traces also involves energy consuming process like distillation. On the contrary, the presence of traces of remaining solvent also sometime makes utilisation of product in end formulation undesirable due to the odor.

Hence, there is a need to develop a novel, efficient and industrially viable and acceptable process for the preparation of mono-alkyl phosphate ester and/or a salt thereof which gives desired product acceptable in the topical compositions.

Additionally, there is a desire to reduce the environmental impact of industrial processes, by reducing their energy consumption and reducing the use of fossil-fuel based products such as solvents.

Therefore, there exists a need for a convenient, simple and energy efficient green process for the preparation alkyl phosphates and its salts that yields higher ratio of the mono alkyl phosphate ester without using any organic solvent.

### Objectives of the invention

It is an objective of the present invention to overcome the drawbacks of prior arts and develop a convenient, simple and energy efficient green process to produce a higher than 90:10 weight ratio of mono:dialkyl phosphate ester.

It is an objective of the present invention to render an industrially applicable, green and solvent free process for preparation of mono: dialkyl phosphate ester and a salt thereof.

It is yet another objective of the present invention to provide a cost-effective process for the industrial manufacture of mono: dialkyl phosphate ester in a higher than 90:10 ratio with reduced the contents of phosphoric acid < 0.7 wt.% and fatty alcohol <1.5 wt.%.

Another objective of the present invention is to provide a process wherein the weight percent ratio of monoalkyl phosphate:dialkyl phosphate ester salt is minimally 89:11 and the amount of inorganic phosphate < 0.9 wt.%.

### Summary of the Invention

The present invention relates to an environmentally benign and solvent free process for the preparation of alkyl phosphates with minimum 90:10 ratio of monoalkyl phosphate:dialkyl phosphate with reduced impurities such as free phosphoric acid < 0.7 wt.%, free fatty alcohol < 1.5 wt.% and no organochloride impurities.

In an aspect, the present invention relates to a process of producing alkyl phosphate and/ or a salt thereof of Formula I, 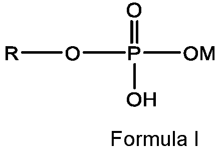 wherein R = C₁₆₋₂₂ alkyl group; M= H, K, or Na. The product obtained contains more than 90:10 ratio of mono: dialkyl phosphate ester, free phosphoric acid <0.7 wt.% and free fatty alcohol < 1.5 wt.% and upon neutralization the composition contains more than 89:11 ratio of monoalkyl: dialkyl phosphate salt, inorganic phosphate < 0.9 wt.%, and free fatty alcohol < 1.5 wt.% and the said process comprising steps of:
A) reacting a fatty alcohol of Formula II with polyphosphoric acid (PPA) of 115 - 120% of Formula III;
B) converting the product of step A) into granules;
C) ageing the granules of alkyl phosphate for maximum 10 days;
D) wetting the granules with water, after ageing; and
E) filtering the granules;
F) optionally neutralizing the filtered granules with an aqueous solution of alkali metal hydroxides; and
G) drying the granules under reduced pressure.

The present invention describes the process for the preparation of mono-alkyl phosphate ester and/or a salt thereof which result in a product which meets the quality requirement for the use in topical compositions.

### Detailed description of the invention

The present invention provides a sustainable process wherein the desired quality of the product is achieved through an eco-friendly, sustainable process which is free of solvent. The inventors of the present invention have designed an industrially applicable process for the preparation of mono-alkyl phosphate ester and/or a salt thereof and have surprisingly found that the mono-alkyl phosphate ester formed undergoes morphological changes during the course of further purification processes, for example granulation, ageing, and wetting, which gives the desired results. It was not possible through the processes mentioned in the prior arts.

The inventors of present invention have designed a process for the preparation of mono-alkyl phosphate ester and/or a salt thereof via a green and sustainable route. The process of the present invention ensures good mono/dialkyl ester ratio, phosphoric acid < 0.7 wt.%, and free fatty alcohol < 1.5 wt.%. In preferred embodiments, the process of the present invention results in potassium alkyl phosphate ester with the desired quality which is compatible in all topical compositions. Advantageously, the process of the present invention does not involve any organic solvent, is cost effective, operationally simple, exploits commercially available raw material, yields good conversion and results in control over impurities.

The process of the present invention is devoid of organic solvents and achieves more than 90:10 weight ratio of monoalkyl:dialkyl phosphate ester and more than 89:11 weight ratio of monoalkyl: dialkyl phosphate ester salt.

Hence, in a preferred embodiment of the invention, a process is provided, wherein steps A) to E) are performed without the presence of organic solvents.

The present invention provides an eco-friendly and cost-effective process for the preparation of mono-alkyl phosphate ester and a salt thereof (Formula I),

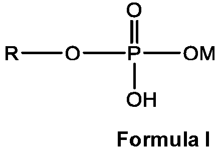

In preferred embodiments of invention, R is selected from the group consisting of substituted C16-C22 alkyl group or unsubstituted C16-C22 alkyl group.

In preferred embodiments of invention, M is selected from the group consisting of hydrogen, potassium, or sodium.

In particularly preferred embodiments R is unsubstituted C16-C22 alkyl group and M is hydrogen or sodium.

In embodiments of the present invention, there is provided a process for the preparation of alkyl phosphate and a salt thereof of Formula I, comprising reaction of fatty alcohol (Formula II) with polyphosphoric acid having a grade between 115% to 120% (Formula III) without employing any organic solvent.

The grade of PPA (e.g. 115% and 120%), refers to the number of phosphoric acid (H3PO4) units involved for the formation of PPA.

The process for the preparation of monoalkyl phosphate ester is depicted in Scheme 1.

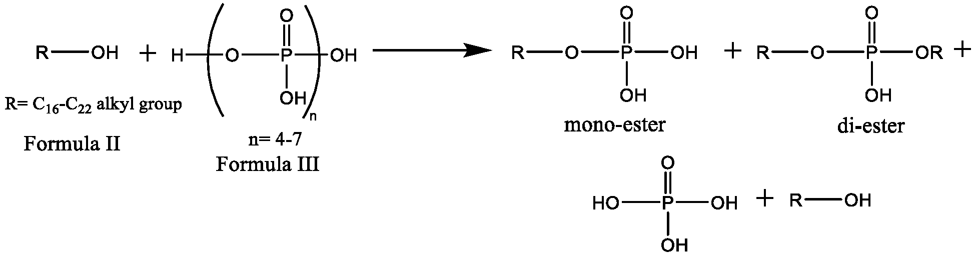

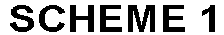

In embodiments of the present invention, the PPA is used in a 2 to 6 mole % excess w.r.t fatty alcohol. This ratio is critical to ensure the at least 90:10 mono:dialkyl phosphate ratio.

In embodiments of the present invention, the temperature is maintained below 100°C, preferably between 70-90°C, more preferably between 80-90 °C.

In embodiments of the present invention, the fatty alkyl phosphate obtained is converted into granules of particle size < 800 micron, more preferably < 500 micron and most preferably < 300 micron measured using screen sieving granulation technique.

In a preferred embodiment, the particle size distribution is such that about 10% of the granules are of particle size less than 10 micron, about 50% less than 60 micron and about 90% less than 300 micron when measured using Malvern Mastersizer 2000 in dry mode.

In embodiments of the present invention, the granules of fatty alkyl phosphate are subjected to ageing at preferably 0-50°C, more preferably 10-50 °C and most preferably between 20-50 °C for minimum one day to 10 days. The ageing of micronized granules is carried out preferably for 1- 9 days, more preferably for 3-8 days, most preferably for 5-7 days.

In embodiments of the present invention, the granules of alkyl phosphate so obtained are subjected to water treatment at solids to water ratio of 10:80 to 40:80 w/w.

In embodiments of the present invention, the treatment of the aged alkyl phosphate granules with water is done at temperature 0 to 50°C, preferably less than 30°C, most preferably less than 5°C

In embodiments of the present invention, the treatment with water is done with minimum or intermittent stirring and for a duration < 2 minute, more preferably < 1 minute and most preferably <30 second.

It is observed that wetting of aged granules lead to better separation of phosphoric acid in matrix. The process of the present invention employs water with temperature of 0 to 50°C, preferably less than 30°C, most preferably less than 5°C during the wetting step D along with the control over the duration of treatment. It has been observed that alkyl phosphate has tendency to form stable dispersion and of wetting process, temperature and time is important for the effective removal of phosphoric acid.

The mass is then filtered using known techniques to remove phosphoric acid and obtaining alkyl phosphate with monoalkyl phosphate: dialkyl phosphate ester ratio of at least 90:10 and free phosphoric acid < 0.7 wt.%.

The product obtained is then partly or completely neutralised with potassium hydroxide or sodium hydroxide, followed by drying, using techniques known in the arts to give the final product with mono: dialkyl phosphate salt ratio of at least 89:11 with inorganic salt < 0.9 wt.% and fatty alcohol < 1.5 wt.%. In embodiments of the invention the neutralization is done with an (approximately) stoichiometric amount of the hydroxide to completely neutralize the product.

In embodiments of the present invention, the drying step of step G is performed under reduced pressure (21331.582 Pa (160 mmHg)) yielding final product.

The critical parameters of the process as described herein is the PPA is used 2 to 6 mole % excess w.r.t fatty alcohol; ageing of granules with temperature and number of days; and wetting time of the granules with water after ageing.

Thus, according to the invention to ensure better ratio of mono alkyl phosphate: dialkyl phosphate, it is necessary to carry out reaction between fatty alcohol with polyphosphoric acid (115 - 120%) preferably PPA is used in 5 mole % excess w.r.t fatty alcohol and without using any solvent. This is followed by granulation ensuring the particle size < 800 micron, more preferably < 500 micron and most preferably < 300 micron using suitable granulation technique and ageing preferably 0-50 °C, more preferably 10-50 °C and most preferably between 20-50 °C for minimum a day to 10 days, followed by treatment with water at 0 to 50°C, preferably less than 30°C, most preferably less than 5°C. The product obtained on filtration is then neutralised using alkali metal hydroxides and dried.

In this document, relative amounts, typically expressed as 'wt.%', are based total dry solids weight of the product, unless indicated otherwise.

### Advantages of the invention

The process is efficiently producing alkyl phosphate containing at least 90:10 ratio of mono:dialkyl phosphate ester while at least 89:11 ratio of mono:dialkyl phosphate ester salt.

The process is simple and cost effective and can be carried out using optimum amount of polyphosphoric acid.

The process produces product with very less amount of free phosphoric acid (< 0.7 wt.%) with residual free fatty alcohol is < 1.5 wt.%.

The process avoids the use of any organic solvent during preparation of alkyl phosphate and a salt thereof, hence is green in nature.

The invention also ensure close loop process by recycling generated phosphoric acid into the stream of polyphosphoric acid.

The process is designed with optimized parameters such as particle size, ageing period, stirring time; beyond which it doesn't manifest a product with desired quality/ specification.

### EXAMPLES

The present invention is now described by way of working on limiting illustrative examples. The details of the invention provided in the following examples is given by the way of illustration only and should not be construed to limit the scope of the present invention.

Cetyl alcohol was procured from Godrej Industries Ltd. and Polyphosphoric acid was procured from Prasol Chemical Pvt. Ltd.

Reactive units of PPA is calculated as taught by Huhti et al., Canadian Journal of Chemistry, 34, 785-397, 1956; Toy et al., Phosphorus Chemistry in Everyday Living, American Chemical Society, 1976; and J-F. Masson, Energy Fuels, 22, 2637-2640, 2008.

### Example 1: Preparation of cetyl phosphate and its potassium salt

A 1000 mL four neck round bottom flask, equipped with a mechanical stirrer, a thermometer and a condenser, was charged with cetyl alcohol (2.06 gmol), polyphosphoric acid (115%, 2.16 gmol). The stirred reaction mass was then heated to 80-90°C. The reaction continued till free cetyl alcohol was found to be <1.5 wt.% by gas chromatographic analysis and no further decrease is seen for cetyl alcohol content. The mass obtained was flaked and converted into granules of particle size <550 micron using Comil granulator. When measured using Malvern Mastersizer 2000 in dry mode, it was found that about 10% of the granules are of particle size less than 10 micron, about 50% less than 60 micron and about 90% less than 300 micron.. The granules were kept for ageing at 42°C for 7 days. After ageing, to another open flask, equipped with mechanical stirrer and thermometer, water (1757 g) was charged and cooled to <5°C, followed by addition of granules (753 g) of cetyl phosphate with intermittent stirring for 1 minute. The material is quickly filtered, washed with water (1255 g) of temperature <5°C. The residue thus obtained is treated with aqueous solution of potassium hydroxide (85%, 142 g, 2.15 gmol in 2337 g water) followed by drying under reduced pressure (21331.582 Pa (160 mmHg)) yielding potassium cetyl phosphate with mono:dicetyl phosphate salt ratio more than 89:11, free inorganic phosphate 0.86 wt.% and free cetyl alcohol content 1.34 wt.%.

### Example 2: Preparation of cetyl phosphate and its potassium salt

A 1000 mL four neck round bottom flask, equipped with a mechanical stirrer, a thermometer and a condenser, was charged with Cetyl alcohol (2.06 gmol), polyphosphoric acid (118%, 2.14 gmol). The stirred reaction mass was then heated to 80-90°C. The reaction was continued till free cetyl alcohol found to be <1.5 wt.% by gas chromatographic analysis and no further decrease is seen in cetyl alcohol content. The mass obtained was flaked and converted into granules of particle size <500 micron using Comil granulator. When measured using Malvern Mastersizer 2000 in dry mode, it was found that about 10% of the granules are of particle size less than 10 micron, about 50% less than 60 micron and about 90% less than 300 micron The granules were kept for ageing at 45°C for 5 days. After 5 days, to the open flask, equipped with mechanical stirrer and thermometer, water (1670 g) was charged and cooled to <5°C, followed by addition of (716 g) of granules of cetyl phosphate with intermittent stirring for 30 sec. The material is quickly filtered, washed with water (1194 g) of temperature <5°C. The residue thus obtained is treated with aqueous solution of potassium hydroxide (85%, 140 g, 2.12 gmol in 2300 g water) followed by drying under reduced pressure (21331.582 Pa (160 mmHg)) yielding potassium cetyl phosphate with mono: dicetyl phosphate salt ratio of 89:11, free inorganic phosphate 0.79 wt.% and free cetyl alcohol content 1.43 wt.%.

### Example 3: Preparation of Behenyl phosphate and its potassium salt

A 1000 mL four neck round bottom flask, equipped with a mechanical stirrer, a thermometer and a condenser, was charged with behenyl alcohol (1.56 gmol), polyphosphoric acid (118 %, 1.64 gmol). The stirred reaction mass was then heated to 80-90°C. The reaction was continued till free behenyl alcohol found to be <1.5 wt.% by gas chromatographic analysis and no further decrease is seen for behenyl alcohol content. The mass obtained was flaked and converted into granules of particle size <500 micron using Comil granulator. When measured using Malvern Mastersizer 2000 in dry mode, it was found that about 10% of the granules are of particle size less than 10 micron, about 50% less than 60 micron and about 90% less than 300 micron The granules were kept for ageing at 40°C for 9 days. After ageing, to another open flask, equipped with mechanical stirrer and thermometer, water (1542 g) was charged and cooled to <5°C, followed by addition of (660 g) of granules of behenyl phosphate with intermittent stirring for 1 minute. The material is quickly filtered, washed with water (1100 g) of temperature <5°C. The residue thus obtained is treated with aqueous solution of potassium hydroxide (85%, 132 g, 2.0 gmol in 2167 g water) followed by drying under reduced pressure (21331.582 Pa (160 mmHg)) yielding potassium behenyl phosphate with mono:dibehenyl phosphate salt ratio more than 90:10, free inorganic phosphate 0.75 wt.% and free behenyl alcohol content 1.45 wt.%.

### Comparative Example 1: Preparation of cetyl phosphate and its potassium salt

A 1000 mL four neck round bottom flask, equipped with a mechanical stirrer, a thermometer and a condenser, was charged with cetyl alcohol (2.06 gmol), polyphosphoric acid (115%, 2.16 gmol). The stirred reaction mass was then heated to 80-90°C. The reaction was continued till free cetyl alcohol found to be <1.5 wt.% by gas chromatographic analysis and no further decrease is seen for cetyl alcohol content. The mass obtained was flaked and converted into granules of particle 1000 micron using Comil granulator and kept for ageing at 40°C for 8 days. After ageing, to another open flask, equipped with mechanical stirrer and thermometer, water (1757 g) was charged and cooled to <5°C, followed by addition of granules (753 g) of cetyl phosphate with intermittent stirring for 1 minute. The material is quickly filtered, washed with water (1255 g) of temperature <5°C. The residue thus obtained is treated with aqueous solution of potassium hydroxide (85%, 145 g, 2.20 gmol in 2337 g water) followed by drying under reduced pressure (21331.582 Pa (160 mmHg)) yielding potassium cetyl phosphate with mono:dicetyl phosphate salt ratio more than 89:11, free inorganic phosphate 3.30 wt.% and free cetyl alcohol content 1.34 wt.%.

It was evident that cetyl phosphate having particle size outside of the claimed range resulted in inefficient removal of inorganic phosphate impurity, rendering product out of specification.

### Comparative Example 2: Preparation of Behenyl phosphate and its potassium salt

A 1000 mL four neck round bottom flask, equipped with a mechanical stirrer, a thermometer and a condenser, was charged with behenyl alcohol (1.56 gmol), polyphosphoric acid (118 %, 1.64 gmol). The stirred reaction mass was then heated to 80-90°C. The reaction was continued till free behenyl alcohol found to be <1.5 wt.% by gas chromatographic analysis and no further decrease is seen for behenyl alcohol content. The mass obtained was flaked and converted into granules of particle size <500 micron using Comil granulator and kept for ageing at 45°C for 5 days. After ageing, to another open flask, equipped with mechanical stirrer and thermometer, water (1542 g) was charged and cooled to <5°C, followed by addition of (660 g) of granules of behenyl phosphate with intermittent stirring for 4 minutes. The longer time spent during stirring resulted into formation of stable dispersion which was difficult to handle and made the filtration step non- viable. This resulted in arresting the further steps and the desired product was not obtained.

### Comparative Example 3: Preparation of cetyl phosphate and its potassium salt

A 1000 mL four neck round bottom flask, equipped with a mechanical stirrer, a thermometer and a condenser, was charged with Cetyl alcohol (2.06 gmol), polyphosphoric acid (118%, 2.14 gmol). The stirred reaction mass was then heated to 80-90°C. The reaction was continued till free cetyl alcohol found to be <1.5 wt.% by gas chromatographic analysis and no further decrease is seen in cetyl alcohol content. The mass obtained was flaked and converted into granules of particle size <500 micron using Comil granulator and kept for ageing at 40°C for 20 days. After 20 days, to the open flask, equipped with mechanical stirrer and thermometer, water (1670 g) was charged and cooled to <5°C, followed by addition of (716 g) of granules of cetyl phosphate with intermittent stirring for 30 sec. The material is quickly filtered, washed with water (1194 g) of temperature <5°C. The residue thus obtained is treated with aqueous solution of potassium hydroxide (85%, 140 g, 2.12 gmol in 2300 g water) followed by drying under reduced pressure (21331.582 Pa (160 mmHg)) yielding potassium cetyl phosphate with mono: dicetyl phosphate salt ratio of 89:11, free inorganic phosphate 0.86 wt.% and free cetyl alcohol content 1.43 wt.%.

It was observed ageing of cetyl phosphate for a longer than claimed period did not result in enhancing the quality of the product ie. getting rid of the inorganic phosphate impurity to a further extent. However, it only increases the batch cycle time.

## Claims

1. A process of producing a mono-alkyl phosphate ester and/or a salt thereof of Formula I 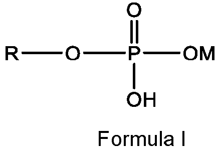
wherein R is selected from the group consisting of C16-C22 alkyl and M is selected from the group consisting of H, K and Na;
wherein the product obtained contains at least 90:10 ratio of mono: dialkyl phosphate ester, free phosphoric acid < 0.7 wt.% and free fatty alcohol < 1.5 wt.% or when the neutralization step F is performed the product contains at least 89:11 ratio of monoalkyl:dialkyl phosphate salt, inorganic phosphate < 0.9 wt.% and free fatty alcohol < 1.5 wt.%; said process comprising steps of:
A) reacting a fatty alcohol of Formula II
R-OH Formula II
wherein R is selected from the group consisting of C16-C22 alkyl group;
with a polyphosphoric acid (PPA) of Formula III having a grade between 115 and 120%; 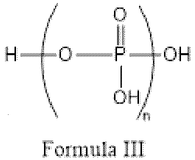
wherein n=4, 5, 6 or 7;
B) converting the product of step A) into granules;
C) ageing the granules of alkyl phosphates for maximum 10 days;
D) wetting the granules with water after ageing;
E) filtering the granules;
F) optionally neutralizing the filtered granules with an aqueous solution of alkali metal hydroxides; and
G) drying the granules under reduced pressure.

2. The process according to claim 1, wherein polyphosphoric acid in step A is used in a 2 to 6 mole % excess with respect to fatty alcohol.

3. The process according to claim 1 or 2, wherein the temperature during step A is maintained below 100°C, preferably between 70-90°C, more preferably between 80-90°C

4. The process according to any one of the claims 1 to 3, wherein alkyl phosphate is converted into granules during step B having a particle size < 800 micron, preferably having a particle size < 500 micron and more preferably having a particle size < 300 micron.

5. The process according to any one of the claims 1 to 4, wherein ageing of granules in step C is carried out at temperature of 0- 50°C, more preferably 10-50°C and most preferably 20-50°C.

6. The process according to any one of the claims 1 to 5, wherein ageing of granules in step C is carried out for 1- 9 days, preferably for 3-8 days, more preferably for 5-7 days.

7. The process according to any one of the claims 1 to 6, wherein the wetting of granules in step D is carried out with water having a temperature of 0 to 50°C, preferably less than 30°C, most preferably less than 5°C.

8. The process according to any one of the claims 1 to 7, wherein wetting time with water is less than 2 minutes, preferably less than 1 minute, most preferably less than 30 seconds.

9. The process according to any one of the claims 1 to 8, wherein the micronized granules are subjected to water treatment at solids to water ratio of 10:80 w/w to 40:80 w/w.

10. The process according to any one of the claims 1 to 9, wherein the alkali metal hydroxides is selected from potassium hydroxide or sodium hydroxide.

## Patentansprüche

1. Verfahren zur Herstellung eines Mono-Alkylphosphatesters und/oder eines Salzes davon der Formel I 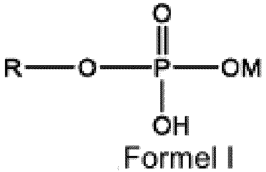
wobei R aus der Gruppe ausgewählt ist, die aus C16-C22-Alkyl besteht und M aus der Gruppe ausgewählt ist, die aus H, K und Na besteht;
wobei das erhaltene Produkt ein Verhältnis von mindestens 90:10 Mono:Dialkylphosphatester, freier Phosphorsäure < 0,7 Gew.-% und freiem Fettalkohol < 1,5 Gew.-% enthält oder wenn der Neutralisationsschritt F ausgeführt wird, das Produkt ein Verhältnis von mindestens 89:11 Monoalkyl:Dialkylphosphatsalz, anorganischem Phosphat < 0,9 Gew.-% und freiem Fettalkohol < 1,5 Gew.-% enthält; wobei das besagte Verfahren folgende Schritte umfasst:
A) Umsetzen eines Fettalkohols der Formel II
R-OH Formel II
wobei R aus der Gruppe ausgewählt ist, die aus C16-C22-Alkylgruppe besteht;
mit einer Polyphosphorsäure (PPA) der Formel III mit einem Gehalt zwischen 115 und 120 %; 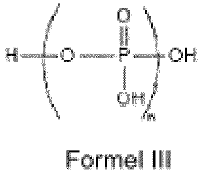
wobei n = 4, 5, 6 oder 7 ist;
B) Umwandeln des Produkts aus Schritt A) in Granulat;
C) Altern des Alkylphosphatgranulats für maximal 10 Tage;
D) Befeuchten des Granulats mit Wasser nach dem Altern;
E) Filtern des Granulats;
F) optional Neutralisieren des gefilterten Granulats mit einer wässrigen Lösung von Alkalimetallhydroxiden; und
G) Trocknen des Granulats unter reduziertem Druck.

2. Verfahren nach Anspruch 1, wobei in Schritt A Polyphosphorsäure in einem Überschuss von 2 bis 6 Mol-% in Bezug auf Fettalkohol verwendet wird.

3. Verfahren nach Anspruch 1 oder 2, wobei die Temperatur während Schritt A unter 100 °C, vorzugsweise zwischen 70-90 °C, noch bevorzugter zwischen 80-90 °C gehalten wird.

4. Verfahren nach einem der Ansprüche 1 bis 3, wobei das Alkylphosphat während Schritt B in Granulat mit einer Partikelgröße < 800 Mikrometer, vorzugsweise mit einer Partikelgröße < 500 Mikrometer und noch bevorzugter mit einer Partikelgröße < 300 Mikrometer umgewandelt wird.

5. Verfahren nach einem der Ansprüche 1 bis 4, wobei das Altern des Granulats in Schritt C bei einer Temperatur von 0-50 °C, bevorzugter 10-50 °C und am bevorzugtesten 20-50 °C ausgeführt wird.

6. Verfahren nach einem der Ansprüche 1 bis 5, wobei das Altern des Granulats in Schritt C 1-9 Tage, vorzugsweise 3-8 Tage, noch bevorzugter 5-7 Tage ausgeführt wird.

7. Verfahren nach einem der Ansprüche 1 bis 6, wobei das Befeuchten des Granulats in Schritt D mit Wasser mit einer Temperatur von 0 bis 50 °C, vorzugsweise weniger als 30 °C, am bevorzugtesten weniger als 5 °C ausgeführt wird.

8. Verfahren nach einem der Ansprüche 1 bis 7, wobei die Quellzeit mit Wasser weniger als 2 Minuten, vorzugsweise weniger als eine Minute, am bevorzugtesten weniger als 30 Sekunden beträgt.

9. Verfahren nach einem der Ansprüche 1 bis 8, wobei das mikronisierte Granulat einer Wasserbehandlung bei einem Feststoff-Wasser-Verhältnis von 10:80 w/w bis 40:80 w/w unterzogen wird.

10. Verfahren nach einem der Ansprüche 1 bis 9, wobei die Alkalimetallhydroxide aus Kaliumhydroxid oder Natriumhydroxid ausgewählt sind.

## Revendications

1. Procédé de production d'un ester de phosphate monoalkyle et/ou d'un sel de celui-ci, de Formule I 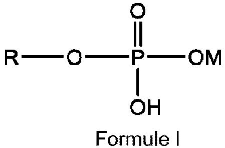
où R est choisi parmi le groupe consistant en alkyle C16-C22 et M est choisi parmi le groupe consistant en H, K et Na ;
où le produit obtenu contient au moins un rapport de 90:10 d'ester de phosphate monoalkyle : ester de phosphate dialkyle, de l'acide phosphorique libre < 0,7% en poids et de l'alcool gras libre < 1,5% en poids ou lorsque l'étape de neutralisation F est effectuée, le produit contient au moins un rapport de 89:1 1 de sel de phosphate monoalkyle : sel de phosphate dialkyle, du phosphate inorganique < 0,9% en poids et de l'alcool gras libre < 1,5% en poids ; ledit procédé comprend des étapes de :
A) réaction d'un alcool gras de Formule Il
R-OH Formule II
où R est choisi parmi le groupe consistant en alkyle C16-C22 ;
avec un acide polyphosphorique (PPA) de Formule III ayant une teneur comprise entre 115 et 120% ; 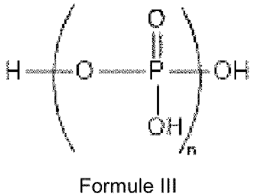
où n = 4, 5, 6 ou 7 ;
B) conversion du produit de l'étape A) en granulés ;
C) vieillissement des granulés de phosphates d'alkyle pendant 10 jours maximum ;
D) mouillage des granulés avec de l'eau après vieillissement ;
E) filtration des granulés ;
F) neutralisation facultative des granulés filtrés avec une solution aqueuse d'hydroxydes de métaux alcalins ; et
G) séchage des granulés sous pression réduite.

2. Procédé selon la revendication 1, où l'acide polyphosphorique de l'étape A est utilisé en excès de 2 à 6 % mol par rapport à l'alcool gras.

3. Procédé selon la revendication 1 ou 2, où la température pendant l'étape A est maintenue en dessous de 100 °C, de préférence entre 70 et 90 °C et préférablement entre 80 et 90 °C.

4. Procédé selon l'une quelconque des revendications 1 à 3, où le phosphate d'alkyle est converti en granulés pendant l'étape B ayant une taille de particule < 800 microns, de préférence ayant une taille de particule < 500 microns et préférablement ayant une taille de particule < 300 microns.

5. Procédé selon l'une quelconque des revendications 1 à 4, où le vieillissement des granulés à l'étape C est effectué à une température comprise entre 0 et 50 °C, préférablement entre 10 et 50 °C et plus préférablement entre 20 et 50 °C.

6. Procédé selon l'une quelconque des revendications 1 à 5, où le vieillissement des granulés à l'étape C est effectué pendant 1 à 9 jours, de préférence pendant 3 à 8 jours, préférablement pendant 5 à 7 jours.

7. Procédé selon l'une quelconque des revendications 1 à 6, où le mouillage des granulés à l'étape D est effectué avec de l'eau dont la température est comprise entre 0 et 50 °C, de préférence inférieure à 30 °C, préférablement inférieure à 5 °C.

8. Procédé selon l'une quelconque des revendications 1 à 7, où le temps de mouillage avec de l'eau est inférieur à 2 minutes, de préférence inférieur à 1 minute, plus préférablement inférieur à 30 secondes.

9. Procédé selon l'une quelconque des revendications 1 à 8, où les granulés micronisés sont soumis à un traitement à l'eau avec un rapport solides/eau de 10:80 p/p à 40:80 p/p.

10. Procédé selon l'une quelconque des revendications 1 à 9, où les hydroxydes de métaux alcalins sont choisis parmi l'hydroxyde de potassium ou l'hydroxyde de sodium.
